# EUROPÄISCHE PATENTSCHRIFT

(11) **EP 3 349 625 B1**
(45) Veröffentlichungstag und Bekanntmachung des Hinweises auf die Patenterteilung: **30.10.2019**
(21) Anmeldenummer: 16763550.7
(22) Anmeldetag: 13.09.2016
(51) Int. Cl.: A47J 31/52, A47J 31/46, F16K 1/38

(54) **BRÜHVORRICHTUNG ZUM ZUBEREITEN EINES HEISSGETRÄNKS**
BREWING APPARATUS FOR PREPARING A HOT BEVERAGE
DISPOSITIF D'INFUSION POUR LA PRÉPARATION D'UNE BOISSON CHAUDE

(30) Priorität: 18.09.2015 DE 102015217997
(43) Veröffentlichungstag der Anmeldung: 25.07.2018
(73) Patentinhaber: FRANKE Kaffeemaschinen AG, 4663 Aarburg (CH)
(72) Erfinder: VETTERLI, Heinz, 8855 Wangen (CH); TURI, Mariano, 8046 Zürich (CH); MÜLLER, Simon, 5037 Muhen (CH)
(74) Vertreter: Lemcke, Brommer & Partner Patentanwälte Partnerschaft mbB
(86) Internationale Anmeldenummer: PCT/EP2016/071585
(87) Internationale Veröffentlichungsnummer: WO 2017/046099

(56) Entgegenhaltungen:
- EP-A2- 1 061 253
- EP-A2- 1 554 958
- CN-A- 101 311 588
- DE-U1-202013 009 305
- KR-A- 20120 117 529
- US-A1- 2015 216 355

## Beschreibung

Die vorliegende Erfindung betrifft ein Verfahren zum Zubereiten eines Heißgetränks, insbesondere Kaffeegetränks, sowie eine zugehörige Brühvorrichtung, bei denen in einem Brühvorgang eine vorgebbare Gesamtmenge an Brühwasser unter Druckbeaufschlagung durch eine von der Brühkammer aufgenommene Menge eines Aromaträgers, insbesondere Kaffeepulver, geleitet wird.

Am Markt befindliche Kaffeemaschinen wie etwa Kaffeevollautomaten oder Espressomaschinen weisen eine Brühkammer auf, in die Pulverkaffee eingefüllt wird, der Pulverkaffee gegebenenfalls verdichtet wird und anschließend unter Druck Heißwasser durchgeleitet wird. Teilweise weisen solche Maschinen zusätzlich ein Mahlwerk auf, mit dem Kaffeebohnen frisch gemahlen werden.

Der Druck, mit dem das Heißwasser durch die Brühkammer geleitet wird, fällt hierbei hauptsächlich über den in der Brühkammer gepressten Kaffeepulver, dem "Kaffeekuchen", ab. Teilweise wurde auch vorgeschlagen, um eine bessere Crema zu erhalten, stromabwärts der Brühkammer ein Drosselventil vorzusehen, mit dem der Druck in der Brühkammer erhöht werden kann.

In der EP 1 133 944 B1 wird vorgeschlagen, hinter der Brühkammer ein mechanisches Regelventil vorzusehen, bei dem eine Feder bestrebt ist, einen Ventilkörper in der Offenstellung zu halten, und bei dem der Ventilkörper vom unter Druck stehenden Kaffeegetränk entgegen der Vorspannkraft der Feder in Schließrichtung verschließbar ist. Die beschriebene Regelventileinrichtung dient dazu, die relative Durchflussrate innerhalb eines gewissen Rahmens konstant zu halten. Mittels einer Stellschraube kann die Federvorspannung und damit die gewünschte Durchflussrate manuell reguliert werden.

Die Schrift US 2015/0216355 A1 beschreibt eine Brühvorrichtung, bei welcher Druck, Temperatur und Durchflussrate unabhängig voneinander eingestellt werden können. Hierzu ist hinter der Brühkammer ein Gegendruckventil angeordnet, über welches der Druck in der Brühkammer eingestellt wird. Das Gegendruckventil kann z.B. ein Nadelventil sein. Die Durchflussrate ist über eine volumetrische Pumpe, mit der das Brühwasser gefördert wird, druckunabhängig einstellbar.

Bei bekannten Kaffeemaschinen wird beobachtet, dass Geschmack und Qualität des gebrühten Kaffees starken Schwankungen unterworfen ist. Neben der verwwendeten Kaffeesorte und -menge haben bei derzeit am Markt befindlichen Kaffeemaschinen vor allem der Mahlgrad des Kaffees und der Verdichtungsgrad des Kaffeepulvers in der Brühkammer einen wesentlichen Einfluss auf den Geschmack des gebrühten Kaffeegetränks. Daneben wird jedoch häufig auch beobachtet, dass nach einer längeren Standzeit der Kaffeemaschine der erste bezogene Kaffee in Geschmack und Qualität stark hinter den Erwartungen zurückbleibt und sogar weggeschüttet werden muss. Jedoch auch im laufenden Betrieb bei ansonsten gleichbleibenden Bedingungen sind Schwankungen in Qualität und Geschmack der bezogenen Kaffeegetränke zu verzeichnen.

Die Erfindung hat sich daher zur Aufgabe gesetzt, die geschmackliche Qualität frisch gebrühter Kaffeegetränke zu steigern, zumindest jedoch die Konstanz in der geschmacklichen Ausprägung nacheinander zubereiteter Kaffeegetränke zu erhöhen.

Die Aufgabe wird gelöst durch eine Brühvorrichtung nach Anspruch 1 und ein Verfahren nach Anspruch 16. Vorteilhafte Ausgestaltungen sind den abhängigen Ansprüchen zu entnehmen.

Eine erfindungsgemäße Brühvorrichtung weist eine druckbeaufschlagbare Brühkammer zum Durchleiten einer vorgebbaren Gesamtmenge an Brühwasser während eines Brühvorgangs durch eine von der Brühkammer aufgenommene Menge an Pulverkaffee auf, sowie eine vor oder hinter der Brühkammer angeordnete Messeinrichtung zur Bestimmung eines Volumenstroms des Brühwassers oder einer Menge des bereits durchgeleiteten oder des noch durchzuleitenden Brühwassers, ein in Durchflussrichtung vorzugsweise hinter der Brühkammer angeordnetes, regelbares Gegendruckventil und eine Steuerung zur Ansteuerung des Gegendruckventils in Abhängigkeit des von der Messeinrichtung bestimmten Wertes. Das Gegendruckventil ist hierbei als motorisch betriebenes Nadelventil ausgebildet, welches die Steuerung durch Ansteuerung eines entsprechenden Antriebsmotors weiter, also z.B. graduell oder schrittweise, öffnet oder schließt.

Durch die vorliegende Erfindung wird somit eine aktive Regelung des von einem in Flussrichtung hinter der Brühkammer angeordneten Gegendruckventils erzeugten Gegendrucks bewirkt, sodass über den gesamten Brühvorgang hinweg der Druck über dem in der Brühkammer befindlichen Kaffeekuchen im Wesentlichen konstant gehalten werden kann. Das erfindungsgemäß eingesetzte Nadelventil ermöglicht hierbei eine einerseits besonders exakte, anderseits schnell ansprechende Regelung der Durchflussrate. Einerseits ermöglicht die aktive Gegendruck-Flussregelung, auf eine konstante Durchflussrate bzw. einen konstanten Auslauf-Volumenstrom während des Brühvorgangs zu regeln. Untersuchungen der Anmelderin haben jedoch gezeigt, dass sich die besten Ergebnisse im Hinblick auf eine möglichst konstante Kaffeequalität erzielen lassen, indem auf eine konstante Gesamtdurchflusszeit des Brühwassers im Rahmen des Brühvorgangs geregelt wird.

Sensorische Untersuchungen der Anmelderin haben gezeigt, dass bei einer Regelung auf eine konstante Durchflusszeit mit Kaffeepulver unterschiedlichen Mahlgrads geschmacklich und qualitativ nahezu identische Kaffeegetränke zubereitet werden können. Dies ist eine unerwartete und durchaus überraschende Erkenntnis, denn bisher war man davon ausgegangen, dass der Geschmack eines Kaffeegetränkes wesentlich durch den Mahlgrad, also die Korngröße, des Kaffeepulvers beeinflusst wird und hatte vor allem zur Zubereitung von Kaffeegetränken der Geschmacksrichtung "Espresso" möglichst feine Kaffeemahlungen verwendet. Dies ist mit der vorliegenden Erfindung nicht länger erforderlich. Der Anmelderin ist es sogar gelungen, mit etwas gröberen Mahlungen sensorisch bessere Kaffeegetränke der Geschmacksrichtung "Espresso" zuzubereiten als mit speziellen, besonders feinen Espressomahlungen, was nach Erkenntnissen der Anmelderin darauf zurückgeführt wird, dass durch zu feine Mahlung Aromen aus dem Kaffee verloren gehen können.

Somit ist die erfindungsgemäße Gegendruck-Flussregelung geeignet, Unterschiede im Mahlgrad des Kaffeepulvers nahezu vollständig auszugleichen, sodass beim Zubereiten von Kaffeegetränken aus frisch gemahlenen Kaffeebohnen technisch wesentlich einfachere und somit kostengünstigere Mahlwerke eingesetzt werden können.

Andererseits ermöglicht die erfindungsgemäße Gegendruck-Flussregelung durch gezielte Veränderung der Durchflusszeit unter Einsatz von Kaffeepulver desselben Mahlgrades, Getränke mit unterschiedlichen sensorischen Ausprägungen zu extrahieren. Darüber hinaus ermöglicht eine Optimierung der Auslaufzeit bei im Wesentlichen gleichbleibender Qualität des Kaffeegetränks den Einsatz einer geringeren Menge Kaffeepulver, sodass die erfindungsgemäße Gegendruck-Flussregelung auch zu einer Einsparung an Kaffeepulver führt.

Bei einer vorteilhaften Ausgestaltung der Erfindung wird somit kontinuierlich oder zumindest mehrmals die Menge des bereits durchgeleiteten oder des noch zu durchzuleitenden Brühwassers bestimmt, um das Gegendruckventil in Abhängigkeit der hiermit bestimmten Menge anzusteuern, sodass der Brühvorgang in einer vorgegebenen Gesamtdurchflusszeit durchgeführt wird. Je nachdem, ob noch mehr oder weniger Brühwasser bei vorgegebener Gesamtbrühwassermenge in der verbleibenden Zeitspanne bis zum Erreichen der vorgegebenen Gesamtdurchflusszeit durch die Brühkammer durchgeleitet werden muss, wird das Gegendruckventil weiter geöffnet oder weiter geschlossen, um den Volumenstrom zu erhöhen bzw. zu verringern.

Als Messgröße und Eingangswert für die erfindungsgemäße Gegendruck-Flussregelung können gemessene Volumenstromwerte, die beispielsweise mittels eines im Wasserzulauf befindlichen Durchflusssensors ermittelt werden, verwendet werden. Aus diesen kann auf einfache Weise die Menge des bereits durchgeleiteten Brühwassers, beispielsweise mittels eines PID-Reglers durch Integration, bestimmt werden.

Das Nadelventil weist zweckmäßig eine von einer Spindel getragene Ventilnadel auf, die gegenüber einer Ventilöffnung durch Verstellen der Spindel axial beweglich ist. Insbesondere kann die Spindel gegenüber einer Spindelmutter federbelastet ist. Eine solche Vorspannfeder, mit der die Spindel gegenüber ihrer Spindelmutter vorgespannt wird, dient vor allem dazu, dass Spindelspiel aufzuheben, welches sich anderenfalls durch eine Drehwinkeldifferenz beim Öffnen und Schließen des Ventils bemerkbar machen würde. Dies ist besonders vorteilhaft bei der Verwendung eines Schrittmotors zur Ansteuerung der Spindel.

Die Ventilöffnung hat vorzugsweise einen Durchmesser von 1 bis 5 mm, weiter bevorzugt von 1 bis 3 mm. Die Ventilnadel kann hierbei zumindest abschnittsweise kegelförmig geformt ausgeführt sein und einen Neigungswinkel von 2° bis 10°, vorzugsweise 4° bis 7° aufweisen.

Als Antriebsmotor kommt wie bereits erwähnt vorzugsweise ein Schrittmotor zum Einsatz. Ein Schrittmotor ermöglicht einerseits ein schnelles Öffnen und Schließen des Ventils, anderseits eine sehr präzise Einstellung der Ventilöffnung.

Dabei ist es insbesondere vorteilhaft, wenn der Schrittmotor in einem Vollschrittmodus und einem Teilschrittmodus betreibbar ist. Über die Steuerung kann dieser so angesteuert werden, dass er in einer ersten Öffnungsphase zu Beginn eines Produktbezugs in dem Vollschrittmodus und in einer zweiten Phase während des Produktbezugs in dem Teilschrittmodus läuft. Somit ist einerseits ein schnelles Öffnen zu Beginn wie auch Schließen am Ende des Produktbezugs gewährleistet, anderseits wird während des Produktbezugs eine sehr präzise und feinschrittige Steuerung des Ventils ermöglicht

Vorzugsweise ist die Steuerung ausgebildet, das Gegendruckventil in Abhängigkeit der von der Messeinrichtung bestimmten Werte derart anzusteuern, dass der Brühvorgang mit einer vorgebbaren, im Wesentlichen konstanten Durchflussgeschwindigkeit, vorzugsweise jedoch in einer vorgebbaren Gesamtdurchflusszeit durchgeführt bzw. abgeschlossen wird. Insbesondere kann die Steuerung als PID-Regler ausgebildet sein.

Bei einer bevorzugten Weiterbildung der Erfindung ist die Steuerung selbstlernend programmiert, sodass sie aus vorausgegangenen Brühvorgängen eine Größe ermittelt, um die ein Flüssigkeitsdurchfluss durch das Gegendruckventil in einer Startphase nach Beginn des Brühvorgangs nach Einsetzen eines Flüssigkeitsstromes gedrosselt werden muss, um die angestrebte Gesamtdurchlaufzeit oder eine vorgesehene Durchflussrate zu erreichen. Es hat sich nämlich herausgestellt, dass gerade in der Startphase nach Beginn des Brühvorgangs ein stark schwankendes Durchlaufverhalten zu beobachten ist, welches möglicherweise durch thermische Ausdehnungseffekte oder elastisches Materialverhalten im Bereich des Ventils zu erklären ist. Insbesondere bei der Verwendung eines von einem Schrittmotor angetriebenen Nadelventils muss das Gegendruckventil in der Startphase teils in beträchtlichem Umfang nachgeregelt werden, um den gewünschten Durchfluss zu erzielen. Hier hat es sich als vorteilhaft herausgestellt, aus unmittelbar vorangegangenen Brühvorgängen zu lernen und zu übernehmen, in welchem Maß das Ventil nach Einsetzen des Flüssigkeitsstroms zu Beginn eines Produktbezugs nachgeregelt werden muss.

Ein weiterer Nutzen und Synergieeffekt des Gegendruckventils ergibt sich dadurch, das Gegendruckventil nach Beendigung des Brühvorgangs vollständig zu schließen. Auf diese Weise wird ein Nachtropfen aus der mit Kaffeegetränk gefüllten Auslaufleitung, welches bei herkömmlichen Kaffeemaschinen typischerweise zu beobachten ist, vermieden. Hierbei hat es sich jedoch als weiterhin vorteilhaft herausgestellt, das nach Produktbezug geschlossene Gegendruckventil eine vorgegebene oder vorgebbare Zeitspanne nach Beendigen des Brühvorgangs wieder zu öffnen. Insbesondere bei Verwendung eines sehr fein regelbaren Nadelventils kann es nämlich nach Beendigen des Produktbezugs durch Abkühlung zu einem Aufschrumpfen bzw. Festsitzen der Ventilnadel im Ventilsitz kommen. Dies wird dadurch vermieden, dass das Nadelventil rechtzeitig bevor eine wesentliche Abkühlung einsetzt, beispielsweise 5 oder 10 s nach Produktbezug, wieder geöffnet wird. Typischerweise hat nach dieser Zeitspanne ein Benutzer sein Trinkbehältnis mit dem frisch ausgegebenen Kaffeegetränk bereits entnommen und etwa noch in der Auslaufleitung verbliebene Getränkereste können sich in den Abtropf entleeren.

Ein weiterer vorteilhafter Aspekt ergibt sich, indem die Steuerung derart programmiert wird, dass Gegendruckventil vor Beginn des Brühvorgangs durch Öffnen und anschließendes Schließen zu initialisieren. Damit wird einerseits sichergestellt, dass sich das Gegendruckventil in einem definierten Zustand, dem geschlossenen Zustand befindet. Andererseits wird insbesondere bei einem Nadelventil sichergestellt, dass das Ventil mit einer definierten Schließkraft geschlossen wurde. Auf diese Weise wird eine durch thermische oder materialelastische Effekte bedingte Schwankung im anfänglichen Auflaufverhalten des Ventils vermindert und somit die Reproduzierbarkeit des Auslaufverhaltens erhöht. Wird das Ventil über einen Schrittmotor angetrieben, so kann es zweckmäßig sein, den Schrittmotor beim Schließen des Ventils mit vermindertem Spulenstrom anzusteuern, so dass die Betätigungskraft beim Schließen vermindert ist und dementsprechend die Gefahr, dass das Ventil beim Schließen festsitzt oder beschädigt wird, reduziert ist.

Die Messvorrichtung, welche die Messwerte zur Ansteuerung des Gegendruckventils liefert, kann vorzugsweise einen Durchflusssensor umfassen. Ein solcher Durchflusssensor oder Flowmeter misst die aktuelle Durchflussrate bzw. den Volumendurchfluss durch den vorgegebenen Leitungsquerschnitt. Durch Integration über den Volumenstrom kann die Menge des bereits durchgeleiteten Brühwassers bestimmt werden. Ein entsprechender Durchflusssensor kann vorzugsweise entweder in einer Frischwasserzuleitung stromaufwärts einer zur Förderung des Brühwassers und zur Druckerzeugung vorgesehenen eine Wasserpumpe angeordnet werden oder zwischen Wasserpumpe und einem Boiler zum Erhitzen des Brühwassers. Möglich wäre auch eine Anordnung des Durchflusssensors zwischen Boiler und der Brühkammer. Ein solcher Durchflusssensor kann gleichzeitig zur Portionierung des Kaffeegetränks, also zum Abmessen der vorgebbaren Gesamtmenge an Brühwasser verwendet werden, so dass hierdurch ein weiterer Synergieeffekt erreicht werden kann. Vorzugsweise befindet sich ein solcher Durchflusssensor im Kaltbereich, also vor einem zur Erhitzung des Brühwassers verwendeten Boilers, da hier die Wassermenge am genauesten gemessen werden kann, da sie nicht durch etwaige Dampfblasen und damit einhergehende Volumenvergrößerung in der Flüssigkeit beeinträchtigt wird.

Neben einer Messung der Durchflussrate kann jedoch auch jede andere Messgröße bestimmt und herangezogen werden, mit der die Menge des bereits durchgeleiteten oder noch durchzuleitenden Brühwassers ermittelt werden kann. Beispielsweise könnte unter einem Getränkebehälter, der zur Aufnahme des Kaffeegetränks unter einem Auslauf positioniert wird, eine Waage angeordnet sein, die die Menge des bereits in den Getränkebehälter ausgegebenen Kaffeegetränks wiegt. Ebenso könnte die vorgegebene Gesamtmenge an Brühwasser in einen Pumpzylinder gefüllt und mittels eines Kolbens durch die Brühkammer gepresst werden. Die Menge des bereits durch die Brühkammer geleiteten oder noch durch die Brühkammer zu leitenden Brühwassers ließe sich in diesem Fall direkt durch den Hubweg des Kolbens bestimmen. Weitere Messverfahren wie induktive oder kapazitive Volumenmessungen liegen ebenfalls im Rahmen der vorliegenden Erfindung.

Bei einem Verfahren zum Zubereiten eines Kaffeegetränks, bei dem in eine Brühkammer eine Menge Kaffeepulver eingebracht und anschließend in einem Brühvorgang eine vorgebbare Gesamtmenge an Heißwasser unter Druckbeaufschlagung durch die Brühkammer durchgeleitet wird, wird die Aufgabe erfindungsgemäß dadurch gelöst, dass während des Brühvorgangs kontinuierlich oder zumindest mehrmals ein Wert für den Volumenstrom des Brühwassers vor oder hinter der Brühkammer, und/oder für die Menge des bereits durchgeleiteten oder des noch durchzuleitenden Brühwassers bestimmt wird und ein in Durchflussrichtung vorzugsweise hinter der Brühkammer angeordnetes, regelbares Gegendruckventil in Abhängigkeit des bestimmten Wertes angesteuert wird.

Anders ausgedrückt dient als Regelparameter ein von der momentanen oder akkumulierten Durchflussrate des Brühwassers abhängiger Wert, der erfindungsgemäß während des Brühvorgangs fortwährend oder zumindest mehrmals zur Ansteuerung und Nachregelung des Gegendruckventils bestimmt wird.

Weitere Vorteile und Eigenschaften der Erfindung ergeben sich anhand der Ausführungsbeispiele und der eingefügten Zeichnungen. Hierbei zeigen:
- Figur 1: ein schematisches Wasserlaufschema der erfindungsgemäßen Brühvorrichtung,
- Figur 2: eine Schnittzeichnung eines im Rahmen der Erfindung zur Gegendruck-Flussregelung verwendeten Nadelventils,
- Figur 2a: eine Detailzeichnung der Ventilnadel und Ventilöffnung aus Figur 2,
- Figur 3: ein Diagramm zum zeitlichen Verlauf der Steuersignale während eines Brühvorgangs,
- Figur 4: ein zeitliches Diagramm des Soll-Wertes und des gemessenen IstWertes der Gegendruck-Flussregelung während eines Brühvorgangs,
- Figur 5: ein zeitliches Diagramm mit dem Verlauf einer Regelkurve für die Ventilstellung in Schritten eines zur Ansteuerung des Ventils dienenden Schrittmotors und der Ist-Wert der von einem Durchflusssensor gemessenen Durchflussrate und
- Figur 6: ein zweites Ausführungsbeispiel einer erfindungsgemäßen Brühvorrichtung.

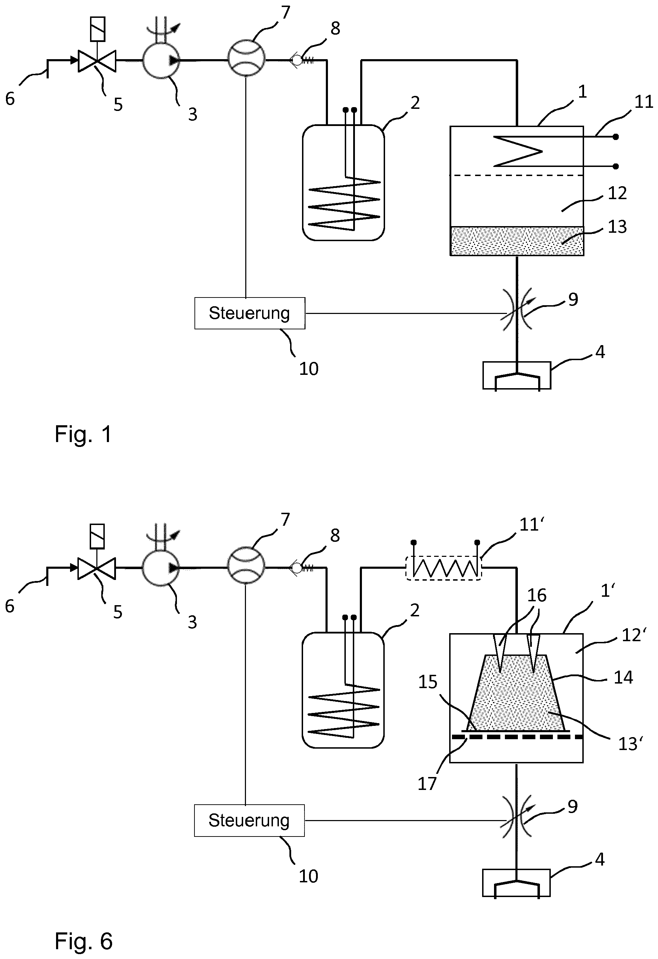

In Figur 1 ist in einem sogenannten Wasserlaufschema der Aufbau einer Brühvorrichtung zur Zubereitung von Kaffeegetränken gezeigt, die beispielsweise in einem Kaffeevollautomaten verwendet werden kann. Die Brühvorrichtung umfasst eine Brühgruppe 1, einen Heißwasserboiler 2, eine zulaufseitige Wasserpumpe 3 und einen Auslauf 4 zur Ausgabe frisch gebrühter Kaffeegetränke. In Flussrichtung vor der Wasserpumpe 3 befindet sich ein Hauptwasserventil 5, über welches die Brühvorrichtung an eine Trinkwasserzuleitung 6 angeschlossen wird. Druckseitig ist die Pumpe 3 über einen Durchflusssensor 7, häufig auch als Flowmeter bezeichnet, und ein Rückschlagventil 8 mit dem Zulauf des Heißwasserboilers 2 verbunden. Heißwasser aus dem Boiler 2 wird der Brühgruppe 1 zugeführt. Zwischen der Brühgruppe 1 und dem Auslauf 4 befindet sich ein regelbares Gegendruckventil 9, welches von einer Steuerung 10 in Abhängigkeit der Messwerte des Durchflusssensors 7 angesteuert wird. Die Steuerung 10 kann hierbei durch einen Mikroprozessor realisiert werden, in dem auch andere Steuer- und Regelvorgänge in einem Kaffeevollautomat implementiert sein können.

Die Brühgruppe umfasst in an sich bekannter Weise eine Heizung 11, mit der die Brühgruppe vorgewärmt und warm gehalten wird, und eine Brühkammer 12, in die portioniertes, frisch gemahlenes Kaffeepulver 13 eingefüllt wird. Eine Brühgruppe, die im Rahmen der vorliegenden Erfindung eingesetzt werden kann, ist beispielsweise in der EP 2561778 A1 beschrieben, auf die, um unnötige Wiederholungen zu vermeiden, hiermit vollinhaltlich Bezug genommen wird.

Die Brühgruppe 1 ist so ausgestaltet, dass sie geöffnet werden kann, um eine portionierte Menge Kaffeepulver einzufüllen, welches zuvor in einer Mühle des Kaffeevollautomaten portionsweise frisch gemahlen wurde. Außerdem kann bei geöffneter Brühgruppe nach dem Brühvorgang der verbleibende Kaffeesatz in einen Tresterbehälter ausgeworfen werden. Die Brühgruppe weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter Druck stehenden Brühwasser durchströmt werden.

Der von der Pumpe 3 erzeugte Druck, mit dem das Brühwasser durch die Brühkammer 12 geleitet wird, beträgt typischerweise, ohne dass die Erfindung aber hierauf beschränkt wäre, etwa 8 bis 12 bar. Dieser Druck des Brühwassers fällt bei herkömmlichen Kaffeemaschinen über dem in der Brühkammer 12 verdichteten Kaffeekuchen 13 ab. Die Geschwindigkeit, mit der das Brühwasser durch das Kaffeepulver 13 läuft, hängt dabei entscheidend vom Mahlgrad des Kaffeepulvers, der Kaffeesorte, der Menge und dem Verdichtungsgrad ab. An der erfindungsgemäßen Brühvorrichtung erfolgt hingegen der Druckabfall vor allem am hinter der Brühkammer 12 angeordneten Gegendruckventil 9, mit dem über die Steuerung 10 gezielt die Durchlaufgeschwindigkeit bzw. Durchflussrate des Pulvers durch die Brühkammer 12 gesteuert werden, und zwar in Abhängigkeit der tatsächlichen, gemessenen Durchflussrate im Durchflusssensor 7.

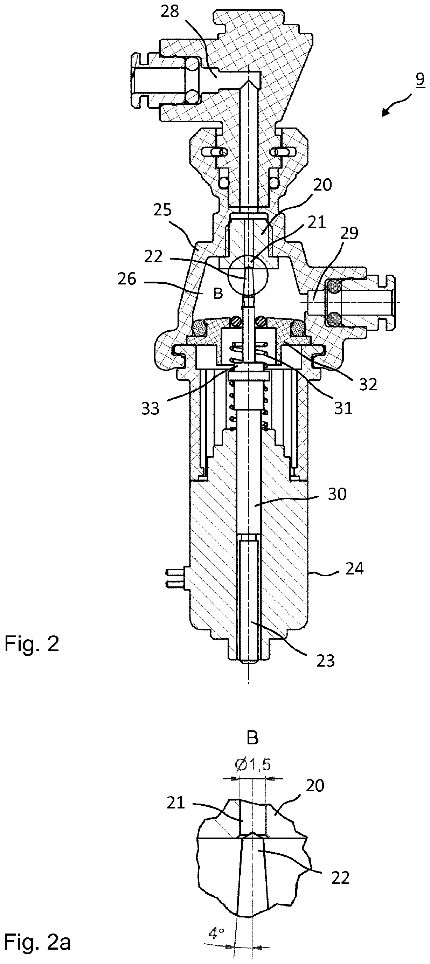

Im Ausführungsbeispiel ist das Gegendruckventil 9 als Schrittmotor getriebenes Nadelventil ausgebildet, welches in Figur 2 in einer Schnittzeichnung dargestellt ist. Kernstück des Nadelventils ist ein Ventileinsatz 20 mit einer durchgehenden Ventilöffnung 21, in die eine Ventilnadel 22 eintaucht. Diese sind in einem Ausschnitt B in Figur 2a vergrößert herausgezeichnet. Die Ventilöffnung 21 hat in den Ausführungsbeispielen einen Durchmesser von 1,5 mm. Die Ventilnadel 22 weist einen sehr steilen Neigungswinkel von lediglich 4° auf.

Die Ventilnadel 22 wird von einer Spindel 23 getragen, die von einem Schrittmotor 24 angetrieben wird. Ventileinsatz 20 und Ventilnadel 22 sind in einem Ventilgehäuse 25 untergebracht, mit dem der Schrittmotor 24 über einen Bajonettverschluss verbunden ist. Die von dem Ventilgehäuse 25 gebildete Ventilkammer 26 ist nach unten hin zu dem Schrittmotor 24 abgedichtet. Am oberen Ende der Ventilkammer 26 befindet sich ein Zulauf 28, der mit der Brühgruppe 1 verbunden wird. Seitlich am Ventilgehäuse 25 befindet sich ein Auslass 29, der mit dem Auslauf 4 der Kaffeemaschine verbunden wird.

Die Spindel 23 wirkt mit einer Spindelmutter 30 zusammen, die am Gehäuse des Schrittmotors 24 gehalten wird. Eine Vorspannfeder 31, die sich an einer Stützplatte 32 an der Unterseite des Ventilgehäuses 25 und einem mit der Ventilnadel 22 verbundenen Bund 33 abstützt, spannt die Ventilnadel 22 bzw. Spindel 23 gegen die Spindelmutter 30 vor und hebt somit ein mögliches Spiel im Spindelantrieb auf.

Ventilgehäuse 25, Ventileinsatz 20 und Ventilnadel 22 bestehen aus hygienischen Gründen aus Kunststoff. Für Ventileinsatz und Ventilnadel haben sich insbesondere hochtemperaturbeständige thermoplastische Kunststoffe, insbesondere PEEK (Polyetheretherketon) bewährt. Alternativ können Ventileinsatz und Ventilnadel auch aus Edelstahl hergestellt sein. Das Ventilgehäuse kann beispielsweise aus PPS oder PPSU (Polyphenylensulfid bzw. Polyphenylensulfon) bestehen.

Um ein geeignetes Ventilverhalten zu erreichen, wird eine Ventilnadel mit einem kegelförmigen Profil verwendet, wobei der Öffnungswinkel zwischen 2 und 15° beträgt. Das beste Regelverhalten wurde bei einer Ventilnadel mit Kegelprofil mit einem Öffnungswinkel von 4° ermittelt, die im Ausführungsbeispiel zum Einsatz kommt.

Der Schrittmotor 24 kann wahlweise in Vollschritten oder in Achtelschritten angesteuert werden. Bei der gewählten Spindelübersetzung entspricht ein Vollschritt einem Hub von 0,021 mm. Der Spindelhub zwischen vollständigem Öffnen und Schließen des Nadelventils beträgt etwa 100 Vollschritte. Zum schnellen Öffnen und Schließen wird der Schrittmotor in Vollschritten angesteuert. Im Regelbetrieb wird dagegen auf Achtelschritte umgestellt. Der Schrittmotor kann außerdem mit unterschiedlichem Spulenstrom, 50 und 100 mA, angesteuert werden. Zum Öffnen und im Regelbetrieb wird der Schrittmotor jeweils mit vollem Spulenstrom angesteuert, beim Schließen des Nadelventils wird der Spulenstrom abgesenkt, um das Ventil mit geringerer Kraft zu schließen, damit es aufgrund der großen Nadelsteilheit nicht zu einem Festsitzen der Ventilnadel 22 in der Ventilöffnung 21 kommt.

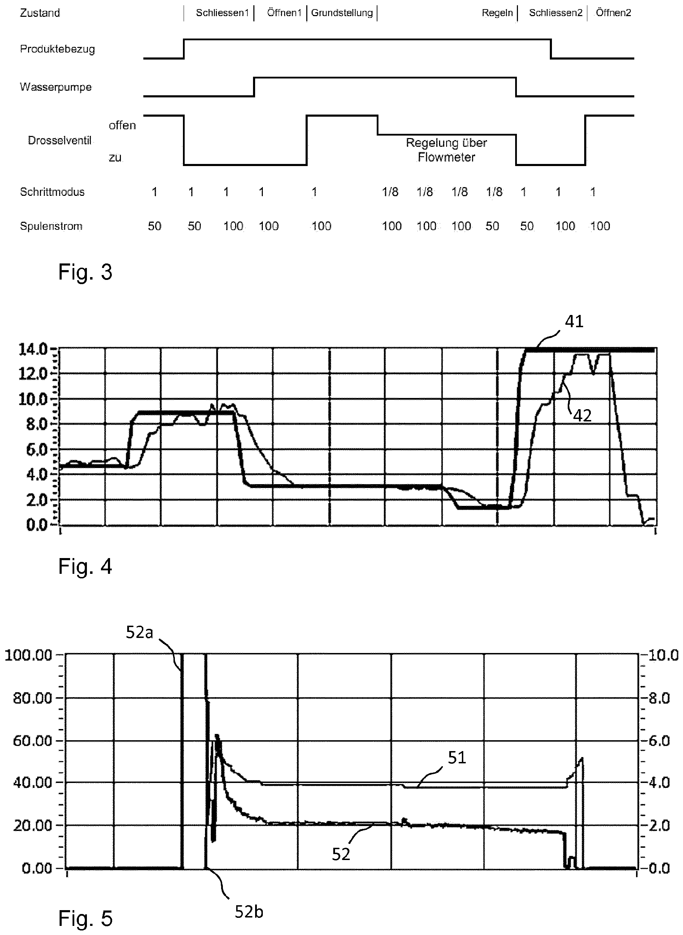

In Figur 3 ist der zeitliche Ablauf bei der Ansteuerung der Brühvorrichtung gezeigt. Vor Beginn eines Produktbezugs ist das Gegendruckventil vollständig geöffnet. Beginnt ein Produktbezug, indem ein Benutzer über entsprechende Eingabemittel eine Produktauswahl durchführt und den Zubereitungsprozess startet, so wird das Gegendruckventil geschlossen. Das Schließen erfolgt wie erläutert im Vollschrittmodus bei reduziertem Spulenstrom. Im nächsten Schritt läuft die Wasserpumpe an und erzeugt einen Wasserdruck. Heißwasser vom Boiler 2 fließt nun zur Brühgruppe 1 bis diese gefüllt ist. Das Gegendruckventil 9 bleibt solange geschlossen. Kommt der Wasserfluss zum Stillstand, weil die Brühgruppe 1 mit Wasser befüllt, wird anschließend das Gegendruckventil 9 geöffnet und der Brühvorgang beginnt.

Nun wird die Schrittmotoransteuerung auf Achtelschrittmodus umgeschaltet und die Regelung des Gegendruckventils erfolgt über die Steuerung 10 anhand der Messwerte des Durchflusssensors 7. Nach Beendigung des Brühvorgangs schaltet die Wasserpumpe ab. Außerdem wird das Gegendruckventil geschlossen. Hierdurch wird verhindert, dass gegebenenfalls noch in den Leitungen befindliche Restflüssigkeit aus dem Auslauf 4 der Kaffeemaschine nachtropft. Der Produktbezug ist nun beendet und dem Benutzer wird über eine grafische Benutzerschnittstelle angezeigt, dass er den Getränkebehälter mit dem angewählten Getränk entnehmen kann.

Schließlich wird eine vorbestimmte Zeitspanne nach Beendigung des Produktbezugs das Drosselventil wieder vollständig geöffnet. Dies hat den Hintergrund, dass aufgrund der großen Nadelsteilheit und thermischen Ausdehnung von Ventileinsatz 20 und Ventilnadel 22 die Ventilnadel 22 in der Ventilöffnung 21 durch sogenanntes Aufschrumpfen festsitzen könnte. Schlimmstenfalls wäre das Ventil nach dem Abkühlen nicht mehr zu öffnen. Um dies zu verhindern, wird das Ventil wie beschrieben nach Beendigung des Produktbezugs, aber rechtzeitig vor einem zu starken Abkühlen geöffnet.

In Figur 4 ist beispielhaft für manuell eingestellte Sollwerte das Folgeverhalten des Ist-Werts für die Durchflussrate gezeigt. Die fett durchgezogene Linie 41 stellt den über die Ventilöffnung des Gegendruckventils 9 eingestellten Soll-Wert für die Durchflussrate in Milliliter pro Sekunde (ml/s) dar. Die dünne Linie 42 zeigt die vom Durchflusssensor 7 gemessenen Ist-Werte. Ein geringfügiger Zeitversatz von etwa 0,8 Sekunden zwischen der Soll-Wert-Kurve 41 und der Ist-Wert-Kurve 42 liegt darin begründet, dass der Durchflusssensor 7 im Kaltwasserbereich vor dem Boiler 2 angeordnet ist. Alternativ könnte ein Durchflusssensor auch direkt vor oder direkt hinter der Brühgruppe 1 angeordnet werden.

In Figur 5 sind der zeitliche Verlauf der Regelkurve und der Ist-Wert der vom Durchflusssensor gemessenen Durchflussrate während eines Produktbezugs im von der Steuerung 10 durchgeführten Regelbetrieb aufgetragen. Die linke Ordinate bezieht sich auf die Stellung des Nadelventils in Schritten des Schrittmotors. Die zugehörige Ventilstellung ist als Kurve 51 dargestellt. Die Ist-Wert-Kurve 52 für die Durchflussrate bezieht sich auf die rechte Ordinate in Milliliter pro Sekunde (ml/s).

Zu Beginn eines Produktbezugs mit Einschalten der Wasserpumpe schnellt die Durchflussrate zunächst in die Höhe und erreicht in einem Bereich 52a einen Spitzenwert, ohne dass das Gegendruckventil 9 geöffnet wäre. Dieser Bereich, bis die Durchflussrate zu einem Zeitpunkt 52b wieder auf null zurückgegangen ist, bezieht sich auf das Füllen der Brühgruppe 1. Sobald die Brühgruppe 1 gefüllt ist, öffnet die Steuerung 10 das Ventil 9 so weit, bis wieder ein Durchfluss einsetzt. Aufgrund der elastischen Eigenschaften im Ventil und einer Vielzahl weiterer Effekte, wie einem möglichen Festklemmen der Ventilnadel bis zum Öffnen, sind zum ersten Öffnen des Gegendruckventils 9 relativ viele Motorschritte erforderlich. Je nach Betriebssituation des Nadelventils 9 können dies durchaus 20 bis 40 Schrittmotorschritte sein, weshalb dieses erste Öffnen vorzugsweise auch mit voller Schrittweite ausgeführt werden kann.

Nach dem ersten Einsetzen eines Flüssigkeitsstroms durch die Brühkammer 12 muss das Gegendruckventil 9 sofort wieder ein Stück geschlossen werden. Die Regelung reagiert in diesem ersten Anfangsbereich sehr sensibel. Thermische Ausdehnungen und die Elastizität des Ventils dürften nach Erkenntnissen der Anmelderin der Grund dafür sein, dass die Regelung dieses oszillierende Verhalten zeigt, bis sie sich stabilisiert hat. Aus diesem Grund ist es vorteilhaft, für dieses Anfangsverhalten nach Einsetzen eines Volumenstroms eine selbstlernende Regelung zu implementieren, welche aus vorangegangenen Brühvorgängen ein Maß dafür ermittelt, um wie viele Schritte das Nadelventil 9 nach dem ersten Öffnen und Einsetzen des Volumenstroms wieder zurückgeregelt bzw. geschlossen werden muss.

Mit der erfindungsgemäßen Gegendruck-Flussregelung können Kaffeegetränke mit verschiedenen Gegendrücken und damit unterschiedlichen Geschmacksausprägungen gebrüht werden. Der Gegendruck kann während des Brühvorgangs in Abhängigkeit des gemessenen Volumenstroms verändert werden. Damit kann beispielsweise auf einem konstanten, vorgegebenen bzw. vorgebbaren Auslaufs-Volumenstrom geregelt werden. Wegen des nicht deterministischen Einschwingverhaltens hat es sich jedoch als besonders vorteilhaft erwiesen, auf eine konstante Auslaufzeit zu regeln, also durch Öffnen oder Schließen des Gegendruckventils die Durchlaufgeschwindigkeit des Brühwassers in Abhängigkeit des bereits durchgelaufenen bzw. noch durchzuleitenden Brühwassers gezielt zu beschleunigen oder zu verlangsamen, sodass insgesamt die vorgegebene Gesamtdurchflusszeit für eine für das gewählte Getränk vorgegebene Gesamtmenge an Brühwasser erreicht wird. Auf diese Weise kann sichergestellt werden, dass alle Getränke desselben Getränketyps, beispielsweise Espresso oder Kaffee Lungo mit jeweils derselben Gesamtdurchlaufzeit zubereitet werden. Dies führt nach Erkenntnissen der Erfindung zu einer sehr hohen Reproduzierbarkeit und Konstanz der Kaffeequalität für eine jeweils vorgegebene Getränkegetränkeart.

Für jede Getränkeart lässt sich eine nach den Kundenwünschen optimale Durchlaufzeit ermitteln bzw. austesten, mit der im Vergleich zu herkömmlichen Kaffeemaschinen die Kaffeequalität erheblich verbessert ist. Daneben lässt sich durch Optimierung der Auslaufzeit eine Verringerung der verwendeten Kaffeemenge zumindest teilweise kompensieren, sodass bei vergleichsweise gleichbleibender Qualität eine Einsparung von benötigtem Kaffee erzielt wird. Schließlich wirken sich Unterschiede im Mahlgrad des Kaffees nicht oder allenfalls geringfügig auf die Kaffeequalität des erfindungsgemäß gebrühten Kaffeegetränks aus, sodass weniger aufwendige Mahlwerke in erfindungsgemäßen Kaffeevollautomaten eingesetzt werden können. Schließlich haben Untersuchungen der Anmelderin die erstaunliche Erkenntnis erbracht, dass mit etwas gröberen Mahlungen sogar leicht bessere sensorische Ergebnisse erzielt werden als mit der bisher verwendeten sehr feinen Mahlung, insbesondere im Bereich der Getränkesorte Espresso.

Je länger mit der erfindungsgemäßen Gegendruck-Flussregelung die Durchflusszeit eingestellt wird, desto höher ist die Extraktionsausbeute der nichtflüchtigen Inhaltsstoffe im zubereiteten Kaffeegetränk und desto stärker ist die sensorische Wahrnehmung in Bezug auf die Geschmackseigenschaften (Säure, Bitterkeit) sowie auf die Adstringenz. Die ermöglicht eine gezielte Steuerung und Optimierung der erfindungsgemäß erzeugten Kaffeegetränke.

In Figur 6 ist ein weiteres Ausführungsbeispiel einer erfindungsgemäßen Brühvorrichtung gezeigt. Im Unterschied zu der in Figur 1 gezeigten Brühvorrichtung ist hier die eine Brüheinheit 1' für eine Portionskaffeemaschine zum Betrieb mit Kaffeekapseln 14 ausgelegt. Die Brühkammer 12' ist zur Aufnahme von Kaffeekapseln ausgebildet. Solche Kaffeekapseln können aus Aluminium oder Kunststoff gefertigt sein und werden ab Werk mit portioniertem Kaffeepulver 13' vorgefüllt und verschlossen, beispielsweise wie in Figur 6 gezeigt mittels einer Membrane an der Unterseite der Kapsel 14.

Die Brühkammer 12' ist im Ausführungsbeispiel in an sich bekannter Weise als Kapselkäfig ausgebildet, der eine eingelegte Kaffeekapsel 14 umschließt. Auf der Oberseite wird die Kapsel 14 von einem oder mehreren Dornen 16 durchstochen. Die kann automatisiert oder manuell erfolgen. Auf der Unterseite wird die Kapsel gegen eine mit Durchlässen versehene Trägerplatte 17, eine sogenannte Pyramidenplatte, gedrückt. Nach dem Starten des Brühvorganges wird heißes Wasser aus dem Heißwasserboiler 2 unter Druck in die Kapsel 14 gepresst. Wird der Druck innerhalb der Kapsel 14 hoch genug, reißt die Membrane 15 an der Unterseite der Kapsel 14 ein und das innerhalb der Kapsel 13 gebrühte Kaffeegetränk kann durch die nun perforierte Membrane 15 und die Durchlässe in der Pyramidenplatte 17 hindurch Richtung Auslauf 4 fließen. Kummulativ oder alternativ zu dem Heißwasserboiler 2 kann im Wasserzulauf der Brüheinheit 1' ein Durchlauferhitzer 11' angeordnet sein, mit dem das Brühwasser erhitzt bzw. nacherhitzt wird.

Wie im ersten Ausführungsbeispiel auch, ist in der Auslassleitung zwischen Brühkammer 12' und Auslauf 4 ein Gegendruckventil 9 angeordnet, mit dem über die Steuerung 10 der Durchfluss in Abhängigkeit der vom Durchflusssensor 7 gemessenen Werte gesteuert werden kann. Auch in diesem Fall kann mittels der erfindungsgemäßen Gegendruck-Flussregelung auf eine vorgegebene Durchflussrate, vorzugsweise aber auf eine vorgegebene Gesamtdurchflusszeit einer vorgegebenen Brühwassermenge geregelt werden.

Bei industriell hergestellten und vorbefüllten Kaffeekapseln 14 spielen zwar weniger die Unterschiede im Mahlgrad des gelieferten Kaffeepulvers 13' eine wesentliche Rolle, aber auch bei einer Kapselkaffeemaschine kann durch die erfindungsgemäße Gegendruck-Flussregelung durch die Einstellung einer für alle nacheinander zubereiteten Kaffeegetränke gleichen Gesamtdurchflusszeit eine wesentlich höhere Konstanz der sensorischen Eigenschaften bzw. der Qualität der ausgegebenen Kaffeegetränke sichergestellt werden. Außerdem kann durch Variation bzw. Optimierung der Gesamtdurchflusszeit eine Anpassung der Geschmackseigenschaften an die Präferenzen eines Benutzers erfolgen.

Selbstverständlich kann die erfindungsgemäße Gegendruck-Flussregelung bei jeglichen Arten von Portionskaffeemaschinen, sowohl solchen für den Betrieb mit Kaffeekapseln als auch solchen für den Betrieb mit Kaffeepads, zum Einsatz kommen. Ebenso kann im Rahmen der erfindungsgemäßen Gegendruck-Flussregelung die Menge an durchzuleitendem Brühwasser verändert und die Gesamtdurchflusszeit entsprechend angepasst werden, beispielsweise zur Ausgabe von unterschiedlichen Kaffeegetränken oder auch für Einzel- bzw. Doppelportionierung.

Ganz allgemein kann die erfindungsgemäße Gegendruck-Flussregelung auch bei allen Arten von Heißgetränkesystemen verwendet werden, wobei Heißgetränke nicht nur mit Kaffeeanteil, sondern auch mit weiteren Geschmackssorten bzw. Aromaträgern wie Kakao oder Tee zubereitet werden können.

## Patentansprüche

1. Brühvorrichtung zum Zubereiten eines Heißgetränks, insbesondere Kaffeegetränks, umfassend
- eine Brühkammer (12) zum Durchleiten einer vorgebbaren Gesamtmenge an Brühwasser während eines Brühvorgangs durch die Brühkammer (12) mit einer in die Brühkammer (12) eingebrachten Menge eines Aromaträgers, insbesondere Kaffeepulver (13),
- eine vor oder hinter der Brühkammer (12) angeordnete Messeinrichtung (7) zur Bestimmung eines Volumenstroms des Brühwassers oder einer Menge des bereits durchgeleiteten oder des noch durchzuleitenden Brühwassers,
- ein in Durchflussrichtung hinter der Brühkammer (12) angeordnetes, regelbares Gegendruckventil (9)
**gekennzeichnet durch**
- eine Steuerung (10) zur Ansteuerung des Gegendruckventils (9) in Abhängigkeit des von der Messeinrichtung (7) bestimmten Wertes,
wobei das Gegendruckventil als motorisch betriebenes Nadelventil (9) ausgebildet ist und die Steuerung (10) durch Ansteuerung eines Antriebsmotors (24) das Nadelventil (9) weiter öffnet oder schließt.

2. Brühvorrichtung nach Anspruch 1, bei der das Nadelventil (9) eine von einer Spindel (23) getragene Ventilnadel (22) aufweist, die gegenüber einer Ventilöffnung (21) durch Verstellen der Spindel (23) axial beweglich ist, wobei vorzugsweise die Spindel (23) gegenüber einer Spindelmutter (30) federbelastet ist.

3. Brühvorrichtung nach Anspruch 2, bei der die Ventilöffnung (21) einen Durchmesser von 1 bis 5 mm, vorzugsweise 1 bis 3 mm aufweist und bei der die Ventilnadel (22) zumindest abschnittsweise kegelförmig geformt ist und einen Neigungswinkel von 2° bis 10°, vorzugsweise 4° bis 7° aufweist.

4. Brühvorrichtung nach einem der vorangehenden Ansprüche, bei der der Antriebsmotors (24) ein Schrittmotor ist.

5. Brühvorrichtung nach Anspruch 4, bei der der Schrittmotor (24) in einem Vollschrittmodus und einem Teilschrittmodus betreibbar ist und bei der die Steuerung (10) ausgebildet ist, den Schrittmotor (24) in einer ersten Öffnungsphase zu Beginn eines Produktbezugs in dem Vollschrittmodus und in einer zweiten Phase während des Produktbezugs in dem Teilschrittmodus anzusteuern.

6. Brühvorrichtung nach Anspruch 4 oder 5, bei der die Steuerung (10) ausgebildet ist, den Schrittmotor (24) beim Schließen des Nadelventils (9) mit einem vermindertem Spulenstrom anzusteuern, so dass die Betätigungskraft beim Schließen vermindert ist.

7. Brühvorrichtung nach einem der vorangehenden Ansprüche, bei der die Steuerung (10) ausgebildet ist, das Nadelventil (9) in Abhängigkeit der von der Messeinrichtung (7) bestimmten Werte derart anzusteuern, dass der Brühvorgang in einer vorgebbaren Gesamtdurchflusszeit abgeschlossen wird.

8. Brühvorrichtung nach einem der vorangehenden Ansprüche, bei der die Steuerung (10) als PID-Regler ausgebildet ist.

9. Brühvorrichtung nach einem der vorangehenden Ansprüche, bei der die Steuerung (10) derart programmiert ist, dass sie aus vorangegangenen Brühvorgängen eine Größe ermittelt, um die ein Flüssigkeitsdurchfluss durch das Nadelventil (9) in einer Startphase nach Beginn des Brühvorgangs gedrosselt werden muss, um eine angestrebte Gesamtdurchflusszeit oder Durchflussrate zu erreichen.

10. Brühvorrichtung nach einem der vorangehenden Ansprüche, bei der die Steuerung (10) derart programmiert ist, dass sie das Nadelventil (9) nach Beendigung des Brühvorgangs schließt, vorzugsweise das Nadelventil (9) eine vorgegebene oder vorgebbare Zeitspanne nach Beendigung des Brühvorgangs wieder öffnet.

11. Brühvorrichtung nach einem der vorangehenden Ansprüche, bei der die Steuerung (10) programmiert ist, das Nadelventil (9) vor Beginn des Brühvorgangs durch Öffnen und anschließendes Schließen zu initialisieren.

12. Brühvorrichtung nach einem der vorangehenden Ansprüche, bei der zur Förderung des Brühwassers und zur Druckerzeugung eine Wasserpumpe (3) vorgesehen ist und bei der die Messeinrichtung einen Durchflusssensor (7) umfasst, der in Strömungsrichtung vor der Wasserpumpe (3) oder zwischen Wasserpumpe (3) und Brühkammer (1) angeordnet ist.

13. Brühvorrichtung nach einem der vorangehenden Ansprüche, bei der die Brühkammer (12') zur Aufnahme von Kaffeekapseln (14) ausgebildet ist und die Brühvorrichtung mit Mitteln (16) zum Öffnen der Kaffeekapseln (14) ausgestattet ist.

14. Kaffeemaschine mit einer Brühvorrichtung nach einem der vorangehenden Ansprüche, welche vorzugsweise ein Mahlwerk zum Mahlen von Kaffeebohnen zu Kaffeepulver aufweist oder als Portionskaffeemaschine, weiter vorzugsweise als Kapselkaffeemaschine, ausgebildet ist.

15. Verfahren zum Zubereiten eines Heißgetränks, insbesondere Kaffeegetränks, mit den Schritten:
- Einbringen einer Menge eines Aromaträgers, insbesondere Kaffeepulver (13), in eine Brühkammer (12),
- in einem Brühvorgang, Durchleiten von einer vorgebbaren Gesamtmenge an Brühwasser durch die Brühkammer (12) unter Druckbeaufschlagung,
**dadurch gekennzeichnet, dass**
- während des Brühvorgangs kontinuierlich oder zumindest mehrmals die Menge des bereits durchgeleiteten oder des noch durchzuleitenden Brühwassers bestimmt wird, vorzugsweise dass während des Brühvorgangs kontinuierlich oder zumindest mehrmals ein Wert für den Volumenstrom des Brühwassers vor oder hinter der Brühkammer bestimmt wird und die Menge des bereits durchgeleiteten oder des noch durchzuleitenden Brühwassers aus den gemessenen Volumenstromwerten ermittelt wird, und dass
- ein in Durchflussrichtung hinter der Brühkammer (12) angeordnetes, regelbares Gegendruckventil (9), welches als motorisch betriebenes Nadelventil (9) ausgebildet ist, in Abhängigkeit der jeweils bestimmten Menge angesteuert wird um den Brühvorgang in einer vorgebbaren Gesamtdurchflusszeit abzuschließen.

## Claims

1. Brewing apparatus for preparing a hot beverage, especially a coffee beverage, comprising
- a brewing chamber (12) for conducting a pre-specifiable total quantity of brewing water through the brewing chamber (12) containing a quantity of a flavour carrier, especially coffee powder (13), which has been introduced into the brewing chamber (12), during a brewing operation,
- a measuring device (7), which is arranged upstream or downstream of the brewing chamber (12), for determining a volumetric flow rate of the brewing water or a quantity of brewing water that has already been conducted through or is still to be conducted through,
- a controllable counter-pressure valve (9) which is arranged downstream of the brewing chamber (12) in the throughflow direction,
**characterised by**
- a controller (10) for actuating the counter-pressure valve (9) in dependence upon the value determined by the measuring device (7),
wherein the counter-pressure valve is in the form of a motor-operated needle valve (9) and the controller (10) further opens or closes the needle valve (9) by actuation of a drive motor (24).

2. Brewing apparatus according to claim 1, wherein the needle valve (9) has a valve needle (22) carried by a spindle (23), which valve needle is movable axially relative to a valve opening (21) by displacement of the spindle (23), the spindle (23) preferably being spring-loaded with respect to a spindle nut (30).

3. Brewing apparatus according to claim 2, wherein the valve opening (21) has a diameter of from 1 to 5 mm, preferably from 1 to 3 mm, and wherein the valve needle (22) is, at least in some portions, conical in shape and has an angle of inclination of from 2° to 10°, preferably from 4° to 7°.

4. Brewing apparatus according to any one of the preceding claims, wherein the drive motor (24) is a stepper motor.

5. Brewing apparatus according to claim 4, wherein the stepper motor (24) is operable in a full-step mode or a part-step mode and wherein the controller (10) is configured to actuate the stepper motor (24) in full-step mode in a first opening phase on commencement of a product dispensing operation and in part-step mode in a second phase during the product dispensing operation.

6. Brewing apparatus according to claim 4 or 5, wherein the controller (10) is configured to actuate the stepper motor (24) with a reduced coil current on closure of the needle valve (9), so that the operating force on closure is reduced.

7. Brewing apparatus according to any one of the preceding claims, wherein the controller (10) is configured to actuate the needle valve (9) in dependence upon the values determined by the measuring device (7) in such a way that the brewing operation is concluded in a pre-specifiable total throughflow time.

8. Brewing apparatus according to any one of the preceding claims, wherein the controller (10) is in the form of a PID controller.

9. Brewing apparatus according to any one of the preceding claims, wherein the controller (10) is programmed in such a way that it ascertains on the basis of preceding brewing operations an amount by which a flow of fluid through the needle valve (9) needs to be throttled in a start phase after commencement of the brewing operation in order to achieve a desired total throughflow time or throughflow rate.

10. Brewing apparatus according to any one of the preceding claims, wherein the controller (10) is programmed in such a way that it closes the needle valve (9) after completion of the brewing operation, and preferably opens the needle valve (9) again a pre-specified or pre-specifiable period after completion of the brewing operation.

11. Brewing apparatus according to any one of the preceding claims, wherein the controller (10) is programmed to initialise the needle valve (9) before commencement of the brewing operation by opening and then closing.

12. Brewing apparatus according to any one of the preceding claims, wherein a water pump (3) is provided for feeding the brewing water and for generating pressure and wherein the measuring device comprises a throughflow sensor (7) which is arranged upstream of the water pump (3) in the flow direction or between the water pump (3) and the brewing chamber (1).

13. Brewing apparatus according to any one of the preceding claims, wherein the brewing chamber (12') is configured to receive coffee capsules (14) and the brewing apparatus is equipped with means (16) for opening the coffee capsules (14).

14. Coffee machine having a brewing apparatus according to any one of the preceding claims, which preferably has a grinding mechanism for grinding coffee beans into coffee powder or is in the form of a portion coffee machine, more preferably in the form of a capsule coffee machine.

15. Method of preparing a hot beverage, especially a coffee beverage, having the steps:
- introduction of a quantity of flavour carrier, especially coffee powder (13), into a brewing chamber (12),
- in a brewing operation, conducting a pre-specifiable total quantity of brewing water through the brewing chamber (12) under the action of pressure,
**characterised in that**
- the quantity of brewing water that has already been conducted through or is still to be conducted through is determined continuously or at least a number of times during the brewing operation; preferably, a value for the volumetric flow rate of the brewing water upstream or downstream of the brewing chamber is determined continuously or at least a number of times during the brewing operation and the quantity of brewing water that has already been conducted through or is still to be conducted through is ascertained on the basis of the measured volumetric flow rate values, and
- a controllable counter-pressure valve (9) arranged downstream of the brewing chamber (12) in the throughflow direction, which valve is in the form of a motor-operated needle valve (9), is actuated in dependence upon the quantity determined in each case in order to conclude the brewing operation in a pre-specifiable total throughflow time.

## Revendications

1. Dispositif d'infusion pour la préparation d'une boisson chaude, en particulier d'une boisson à base de café, comprenant
- un compartiment d'infusion (12) pour faire passer une quantité totale prédéfinissable d'eau d'infusion à travers le compartiment d'infusion (12) pendant un processus d'infusion, avec une certaine quantité d'un vecteur d'arôme, en particulier de café en poudre (13), introduite dans le compartiment d'infusion (12),
- un équipement de mesure (7), disposé avant ou après le compartiment d'infusion (12), pour déterminer le débit volumique de l'eau d'infusion ou la quantité d'eau d'infusion déjà passée ou restant à passer,
- une soupape de contre-pression réglable (9), disposée après le compartiment d'infusion (12) dans le sens de passage,
**caractérisé par**
- une commande (10) pour activer la soupape de contre-pression (9) en fonction de la valeur déterminée par l'équipement de mesure (7),
sachant que la soupape de contre-pression est réalisée sous la forme d'une soupape à pointeau (9) actionnée par moteur, et la commande (10) ouvre ou ferme davantage la soupape à pointeau (9) en activant un moteur d'entraînement (24).

2. Dispositif d'infusion selon la revendication 1, dans lequel la soupape à pointeau (9) présente un pointeau de soupape (22) porté par une broche (23), pointeau qui est axialement mobile par rapport à une ouverture de soupape (21) par déplacement de la broche (23), sachant de préférence que la broche (23) est sollicitée par ressort par rapport à un écrou de broche (30).

3. Dispositif d'infusion selon la revendication 2, dans lequel l'ouverture de soupape (21) présente un diamètre de 1 à 5 mm, de préférence de 1 à 3 mm, et dans lequel le pointeau de soupape (22) est réalisé au moins sectoriellement de forme conique et présente un angle d'inclinaison de 2° à 10°, de préférence de 4° à 7°.

4. Dispositif d'infusion selon l'une des revendications précédentes, dans lequel le moteur d'entraînement (24) est un moteur pas à pas.

5. Dispositif d'infusion selon la revendication 4, dans lequel le moteur pas à pas (24) peut être exploité dans un mode à pas entier et dans un mode à pas partiel, et dans lequel la commande (10) est réalisée pour activer le moteur pas à pas (24) dans le mode à pas entier dans une première phase d'ouverture au début d'une distribution de produit, et dans le mode à pas partiel dans une deuxième phase pendant la distribution de produit.

6. Dispositif d'infusion selon la revendication 4 ou 5, dans lequel la commande (10) est réalisée pour activer le moteur pas à pas (24) avec un courant de bobine réduit lors de la fermeture de la soupape à pointeau (9), de sorte que la force d'actionnement est réduite lors de la fermeture.

7. Dispositif d'infusion selon l'une des revendications précédentes, dans lequel la commande (10) est réalisée pour activer la soupape à pointeau (9), en fonction des valeurs déterminées par l'équipement de mesure (7), de telle sorte que le processus d'infusion soit achevé en un temps total de passage prédéfinissable.

8. Dispositif d'infusion selon l'une des revendications précédentes, dans lequel la commande (10) est réalisée sous la forme d'un régulateur PID.

9. Dispositif d'infusion selon l'une des revendications précédentes, dans lequel la commande (10) est programmée de telle sorte qu'elle détermine à partir des processus d'infusion précédents un montant duquel le passage de liquide à travers la soupape à pointeau (9) doit être étranglé dans une phase de démarrage après le début du processus d'infusion afin d'obtenir un temps total de passage ou un débit de passage souhaité.

10. Dispositif d'infusion selon l'une des revendications précédentes, dans lequel la commande (10) est programmée de telle sorte qu'elle ferme la soupape à pointeau (9) après l'achèvement du processus d'infusion, de préférence qu'elle rouvre la soupape à pointeau (9) après un laps de temps prédéfini ou prédéfinissable après l'achèvement du processus d'infusion.

11. Dispositif d'infusion selon l'une des revendications précédentes, dans lequel la commande (10) est programmée de telle sorte qu'elle initialise la soupape à pointeau (9) avant le début du processus d'infusion en l'ouvrant puis la fermant.

12. Dispositif d'infusion selon l'une des revendications précédentes, dans lequel il est prévu une pompe à eau (3) afin de véhiculer l'eau d'infusion et de générer une pression, et dans lequel l'équipement de mesure comprend un capteur de débit (7) qui est disposé avant la pompe à eau (3) ou entre la pompe à eau (3) et le compartiment d'infusion (12) dans le sens d'écoulement.

13. Dispositif d'infusion selon l'une des revendications précédentes, dans lequel le compartiment d'infusion (12') est réalisé pour recevoir des capsules de café (14), et le dispositif d'infusion est équipé de moyens (16) pour ouvrir les capsules de café (14).

14. Machine à café avec un dispositif d'infusion selon l'une des revendications précédentes, qui présente de préférence un moulin pour moudre des grains de café en café en poudre, ou qui est réalisée sous forme de machine à café à portions, d'une manière plus préférée sous forme de machine à café à capsules.

15. Procédé pour la préparation d'une boisson chaude, en particulier d'une boisson à base de café, avec les étapes suivantes :
- introduction d'une certaine quantité d'un vecteur d'arôme, en particulier de café en poudre (13), dans un compartiment d'infusion (12),
- au cours d'un processus d'infusion, faire passer une quantité totale prédéfinissable d'eau d'infusion à travers le compartiment d'infusion (12) sous une contrainte de pression,
**caractérisé en ce que**
- pendant le processus d'infusion, on détermine en continu ou au moins à plusieurs reprises la quantité d'eau d'infusion déjà passée ou restant à passer, de préférence **en ce que**, pendant le processus d'infusion, on détermine en continu ou au moins à plusieurs reprises la valeur du débit volumique de l'eau d'infusion en amont ou en aval du compartiment d'infusion, et on détermine à partir des valeurs mesurées de débit volumique la quantité d'eau d'infusion déjà passée ou restant à passer, et **en ce que**
- une soupape de contre-pression réglable (9) disposée après le compartiment d'infusion (12) dans le sens de passage, qui est réalisée sous la forme d'une soupape à pointeau (9) actionnée par moteur, est activée en fonction de la quantité respectivement déterminée afin d'achever le processus d'infusion en un temps total de passage prédéfinissable.
